# EUROPÄISCHE PATENTSCHRIFT

(11) **EP 4 365 858 B1**
(45) Veröffentlichungstag und Bekanntmachung des Hinweises auf die Patenterteilung: **05.08.2026**
(21) Anmeldenummer: 22205863.8
(22) Anmeldetag: 07.11.2022
(51) Int. Cl.: G06V 40/10

(54) **VERFAHREN UND VORRICHTUNG ZUM ERMITTELN EINER ANZAHL VON PERSONEN IN EINEM FAHRENDEN FAHRZEUG**
METHOD AND DEVICE FOR DETERMINING A NUMBER OF PERSONS IN A MOVING VEHICLE
PROCÉDÉ ET DISPOSITIF DE DÉTERMINATION D'UN NOMBRE DE PERSONNES DANS UN VÉHICULE EN MARCHE

(43) Veröffentlichungstag der Anmeldung: 08.05.2024
(73) Patentinhaber: Yunex Traffic Austria GmbH, 1210 Wien (AT)
(72) Erfinder: Wondracek, Christoph, 2020 Hollabrunn (AT); Perschl, Christian, 2123 Hautzendorf (AT); Kubu, Bernd, 2640 Gloggnitz (AT)
(74) Vertreter: Patentanwaltskanzlei WILHELM & BECK

(56) Entgegenhaltungen:
- EP-A1- 3 654 276
- US-A1- 2015 278 617
- MIYAMOTO SHINICHI: "Passenger in vehicle counting method of HOV/HOT system", 2018 24TH INTERNATIONAL CONFERENCE ON PATTERN RECOGNITION (ICPR), IEEE, 20 August 2018 (2018-08-20), pages 1536 - 1541, XP033454133, DOI: 10.1109/ICPR.2018.8545415
- ANONYMOUS: "Künstliche Intelligenz - Wikipedia", 18 October 2022 (2022-10-18), XP055972710, Retrieved from the Internet <URL:https://de.wikipedia.org/wiki/Künstliche_Intelligenz> [retrieved on 20221019]

## Beschreibung

Die Erfindung betrifft ein Verfahren zum Ermitteln einer Anzahl von Personen in einem Fahrzeug und eine Vorrichtung zum Ermitteln einer Anzahl von Personen in einem fahrenden Fahrzeug.

Aus dem Stand der Technik ist es bekannt, mithilfe einer Kamera ein Bild eines Fahrzeuges aufzunehmen und durch eine Bildauswertung eine Anzahl von Personen im Fahrzeug zu detektieren. Zum Beispiel "Passenger in vehicle counting method of HOV/ HOT system" by Miyamoto in 24th Int. Conf. on Pattern Recognition, Beijing, China, Aug. 2018, offenbart ein solches Verfahren.

Die Aufgabe der Erfindung besteht darin, ein verbessertes Verfahren und eine verbesserte Vorrichtung zum Ermitteln einer Anzahl von Personen in einem Fahrzeug bereitzustellen.

Die Aufgabe der Erfindung wird durch die unabhängigen Ansprüche gelöst.

Weiterbildungen der Erfindung sind in den abhängigen Ansprüchen angegeben.

Es wird ein Verfahren zum Ermitteln einer Anzahl von Personen in einem fahrenden Fahrzeug vorgeschlagen. Dabei werden mit einer Kamera zeitlich nacheinander mehrere Bilder von einem Aufnahmebereich aufgenommen. Die Bilder werden in einem Datenspeicher abgelegt. Es werden die Aufnahmezeitpunkte, zu denen die Bilder aufgenommen wurden, zusätzlich zu den Bildern im Datenspeicher gespeichert. Zudem werden mithilfe eines Sensors ein Ankunftszeitpunkt des fahrenden Fahrzeuges im Aufnahmebereich ermittelt. Das Fahrzeug bewegt sich auf den Aufnahmebereich zu. Beispielsweise ist der Aufnahmebereich im Bereich einer Straße angeordnet und umfasst wenigstens einen Teilbereich eines Bildes, das von der Kamera aufgenommen werden kann. Der Aufnahmebereich kann beispielsweise eine Breite von 2 bis 10 m im Bereich der Straße in Längsrichtung der Straße gesehen aufweisen. Zudem kann der Aufnahmebereich im Bereich der Straße eine Höhe von 1 bis 4 m insbesondere senkrecht zu einer Straßenoberfläche aufweisen.

Mithilfe des Sensors, der beispielsweise einen Abstand des Fahrzeuges relativ zum Sensor erfasst, kann zudem eine Geschwindigkeit des Fahrzeuges ermittelt werden. Die Geschwindigkeit kann z.B. mithilfe eines Lasersignals ermittelt werden. Zudem kann eine zeitliche Änderung des Abstandes des Fahrzeuges zum Sensor erfasst werden. Somit kann aufgrund der Geschwindigkeit und des Abstandes des Fahrzeuges eine Ankunftszeit des Fahrzeuges im Aufnahmebereich ermittelt werden. Dazu ist die relative Position des Aufnahmebereiches bezogen auf den Sensor bekannt und wird bei der Ermittlung der Ankunftszeit des Fahrzeuges im Aufnahmebereich berücksichtigt. Als Ankunftszeit kann beispielsweise der Zeitpunkt angenommen werden, zu dem sich das Fahrzeug vollständig im Aufnahmebereich befindet. Abhängig von der gewählten Ausführungsform können jedoch auch andere Zeitpunkte als Ankunftszeitpunkt gewählt werden, wie beispielsweise der Zeitpunkt, zu dem sich ein vorderer Teilabschnitt des Fahrzeuges im Aufnahmebereich oder ein in Fahrtrichtung gesehen hinterer Teilabschnitt des Fahrzeuges im Aufnahmebereich befindet.

Der Ankunftszeitpunkt wird dazu verwendet, um wenigstens ein Bild aus dem Datenspeicher auszuwählen, das in einem Zeitbereich um den Ankunftszeitpunkt aufgenommen wurde. Der Zeitbereich kann so gewählt werden, dass wenigstens ein Bild des Datenspeichers ausgewählt wird, in dem sich das Fahrzeug wenigstens teilweise, insbesondere vollständig, im Aufnahmebereich befindet. Anhand des wenigstens einen ausgewählten Bildes wird die Anzahl der Personen im Fahrzeug ermittelt. Dabei können verschiedene Verfahren wie beispielsweise eine optische Überprüfung durch eine Bedienperson oder ein Bildauswerteverfahren verwendet werden, um anhand des Bildes und der im Bild dargestellten Körperteile der Personen die Anzahl der Personen im Fahrzeug zu ermitteln. Beispielsweise kann zur Auswertung des ausgewählten Bildes eine Künstliche Intelligenz, insbesondere ein trainiertes neuronales Netz, verwendet werden, mit dem die Anzahl der Personen im Fahrzeug ermittelt wird.

Das beschriebene Verfahren hat den Vorteil, dass die Kamera zeitlich nacheinander die Bilder aufnimmt. Damit ist die Aufnahme der Bilder entkoppelt von einem präzisen Zeitpunkt, zu dem sich das fahrende Fahrzeug in den Aufnahmebereich hineinbewegt. Durch die insbesondere kontinuierliche Aufnahme von zeitlich nacheinander folgenden Bildern muss die Kamera nicht separat für die Aufnahme eines Bildes angesteuert werden. Die aufgenommenen Bilder können später ausgewählt und analysiert werden.

Da die Kamera feststeht, ist der Aufnahmebereich räumlich festgelegt. Je kürzer die Aufnahmezeit der Kamera ist, umso unempfindlicher ist das aufgenommene Bild gegenüber natürlicher Lichteinstrahlung, die sich im Laufe des Tages ändert. Zudem können zusätzlich eine künstliche Lichtquelle und/oder ein Tageslichtfilter verwendet werden, um Störeffekte des Umgebungslichtes weiter zu reduzieren. Da der Ankunftszeitpunkt des Fahrzeuges im Aufnahmebereich mithilfe des Sensors erfasst wird, können die Bilder oder das Bild ausgewählt werden, die eine möglichst gute Auswertung in Bezug auf die Anzahl der Personen im Fahrzeug ermöglichen. Der festgelegte Zeitbereich und der Ankunftszeitpunkt kann in der Weise variiert werden, dass wenigstens ein Bild oder mehrere Bilder, beispielsweise zwei bis zehn Bilder, im Zeitbereich aufgenommen wurden, in denen wenigstens ein Teilbereich des Innenraums des Fahrzeuges im Bild abgelichtet ist.

In einer Ausführungsform wird der Aufnahmebereich von einer Lichtquelle zu den Aufnahmezeitpunkten, zu denen die Kamera die Bilder des Aufnahmebereichs aufnimmt, künstlich beleuchtet. Abhängig von der gewählten Ausführungsform kann der Aufnahmebereich mithilfe der Lichtquelle auch über einen längeren Zeitraum beleuchtet werden, der wenigstens zwei aufeinanderfolgende Aufnahmezeitpunkte von zwei aufeinanderfolgenden Bildern umfasst. Eine kürzere Beleuchtung des Aufnahmebereichs weist den Vorteil auf, dass weniger Strom durch die Lichtquelle verbraucht wird, die Lichtquelle eine kürzere Beleuchtungszeit aufweist und dadurch weniger beansprucht wird. Zudem werden die Personen des Fahrzeuges durch eine kürzere Beleuchtungszeit weniger geblendet werden. Die geringere Blendwirkung der kurzzeitigen Lichtabgabe durch die Lichtquelle ist insbesondere für den Fahrer des Fahrzeuges von Vorteil, da dessen Sehfähigkeit geringer durch das Licht die Lichtquelle beeinträchtigt wird.

In einer weiteren Ausführungsform gibt die Lichtquelle eine elektromagnetische Strahlung mit einer Wellenlänge zwischen 720 nm und 750 nm ab. Bei Versuchen haben sich insbesondere Wellenlängen zwischen 730 nm und 735 nm als vorteilhaft erwiesen. Der vorgeschlagene Wellenlängenbereich weist den Vorteil auf, dass elektromagnetische Strahlung mit dieser Wellenlänge auch bei Fahrzeugen mit einer Wärmeschutzverglasung mit einem hohen Anteil in den Innenraum des Fahrzeuges eindringt und dadurch den Innenraum gut ausleuchtet. Dadurch wird der Kontrast der aufgenommenen Bilder erhöht. Zudem kann die Belichtungszeit der Kamera durch die gute Ausleuchtung des Innenraums kürzer gewählt werden, damit insbesondere bei schnell fahrenden Fahrzeugen die Schärfe des aufgenommenen Bildes hoch ist. Die kurze Belichtungszeit der Kamera reduziert oder vermeidet ein Verwischen einer Abbildung einer Person im Bild.

In einer weiteren Ausführungsform nimmt die Kamera Bilder mit einer Aufnahmerate von mehr als 40 Bildern pro Sekunde auf. Je höher die Aufnahmerate der Bilder ist, umso größer ist die Wahrscheinlichkeit, dass Bilder mit einem hohen Informationsgehalt vom Innenraum des vorbeifahrenden Fahrzeuges aufgenommen werden. Somit wird durch eine hohe Aufnahmerate die Anzahl der Bilder auch bei schnell fahrenden Fahrzeugen erhöht, in denen der Innenraum des Fahrzeuges auf den Bildern sichtbar ist. Versuche haben gezeigt, dass bei einer Aufnahmerate von mehr als 60 oder 75 Bildern pro Sekunde, insbesondere von mehr als 100 Bildern pro Sekunde, auch bei schnell fahrenden Fahrzeugen mit Geschwindigkeiten von über 100 km/h oder über 130 km/h ausreichend Bilder für eine gute Erkennung der Anzahl der Personen im Fahrzeug zur Verfügung stehen.

Die Belichtungszeit der Kamera kann beispielsweise 50µs und kürzer sein. Die zeitlichen Abstände zwischen den Belichtungen der einzelnen Bilder kann z.B. im Bereich zwischen 0,014 bis 0,011 Sekunden betragen.

In einer weiteren Ausführungsform weist die Lichtquelle eine Strahlungsleistung von über 1.000.000 Lumen, insbesondere über 2.000.000 Lumen oder mehr aufweisen. Das abgestrahlte Licht kann die Farbtemperatur cool white haben. Die Lichtquelle kann wenigstens 8 kW, insbesondere von wenigstens 12 kW oder mehr an Strom aufnehmen.

In einer weiteren Ausführungsform ist die Lichtquelle ausgebildet, um die elektromagnetische Strahlung in Form von gepulster Strahlung abzugeben. Die gepulste Strahlung kann beispielsweise eine Beleuchtungszeit von weniger als 70 µs, insbesondere weniger als 50 µs, oder weniger als 35 ms, aufweisen. Die Frequenz der Beleuchtung durch die Lichtquelle entspricht beispielsweise der Bildaufnahmefrequenz der Kamera. Beispielsweise wird die Lichtquelle von der Kamera gesteuert.

Die gepulste Strahlung wird von der Lichtquelle vorzugsweise zu den Aufnahmezeitpunkten der Kamera abgegeben, um zu den Aufnahmezeitpunkten eine möglichst gute Ausleuchtung des Aufnahmebereichs zu erreichen. Durch die kurzen Pulszeiten beziehungsweise die kurze Beleuchtungszeit werden die Personen des Fahrzeuges kaum oder nur gering geblendet. Dadurch wird die Sicherheit der Personen im Fahrzeug, insbesondere die Fahrfähigkeit des Fahrers des Fahrzeuges kaum oder nicht beeinträchtigt.

In einer weiteren Ausführungsform werden mehrere abgespeicherte Bilder, insbesondere zwei bis zehn Bilder, in einem Zeitbereich um den Ankunftszeitpunkt aus dem Datenspeicher ausgewählt. Anhand der ausgewählten Bilder wird die Anzahl der Personen im Fahrzeug ermittelt.

Die ausgewählten Bilder werden beispielsweise dahingehend untersucht, welches der ausgewählten Bilder die größte Anzahl der Personen im Fahrzeug zeigt. Die größte Anzahl der Personen der ausgewählten Bilder kann vorzugsweise als die erkannte Anzahl der Personen im Fahrzeug ausgegeben werden.

Durch die Verwendung mehrerer Bilder kann eine präzisere Feststellung der Anzahl der Personen erreicht werden. Da die ausgewählten Bilder zeitlich nacheinander aufgenommen wurden, zeigen die ausgewählten Bilder das Fahrzeug aus verschiedenen Aufnahmerichtungen. Durch die Verwendung mehrerer Bilder wird die Wahrscheinlichkeit erhöht, dass wenigstens auf einem der ausgewählten Bilder die tatsächliche Anzahl der im Fahrzeug befindlichen Personen sichtbar ist. Zudem kann durch die Verwendung mehrerer ausgewählter Bilder erreicht werden, dass einzelne oder mehrere ausgewählte Bilder mit schlechter Bildqualität nicht das Ergebnis der ermittelten Anzahl der Personen beeinträchtigt. Zudem haben Versuche gezeigt, dass zwei bis zehn Bilder mit einem Computerprogramm zur automatischen Bildauswertung ausreichend schnell ausgewertet werden können, um die Anzahl der Personen im Fahrzeug zeitnah zu ermitteln. Die Auswertung für die Erkennung der Anzahl der Personen im Fahrzeug kann in weniger als 1 Sekunde erfolgen.

In einer Ausführungsform wird das wenigstens eine ausgewählte Bild mithilfe einer Künstlichen Intelligenz, insbesondere mithilfe eines trainierten neuronalen Netzes, ausgewertet. Die Künstliche Intelligenz wertet das wenigstens eine ausgewählte Bild dahingehend aus, wie viele Personen in dem Fahrzeug auf dem ausgewählten Bild erkennbar sind. Dazu kann die Künstliche Intelligenz entsprechend mit einem Machine-Learning-Verfahren vorab trainiert worden sein. Für das neuronale Netz werden beispielsweise Open-Source-Programme wie Python verwendet. Das Trainieren des neuronalen Netzes erfolgt mithilfe von gelabelten Vergleichsbildern, bei denen die Anzahl der im Bild dargestellten Personen bekannt ist.

In einer weiteren Ausführungsform werden mehrere ausgewählte Bilder mithilfe der Künstlichen Intelligenz dahingehend ausgewertet, wie viele Personen in dem Fahrzeug auf den ausgewählten Bildern erkennbar sind. Die größte Anzahl der Personen in einem der ausgewählten Bilder kann vorzugsweise als die Anzahl der Personen des Fahrzeuges ausgegeben werden. Die Künstliche Intelligenz kann auch bei dieser Ausführungsform mit einem entsprechenden Machine-Learning-Verfahren vorab trainiert worden sein.

In einer weiteren Ausführungsform werden mithilfe einer zweiten Kamera zeitlich nacheinander mehrere zweite Bilder vorzugsweise von einem zweiten Aufnahmebereich gemacht. Die zweiten Bilder werden in einem Datenspeicher gespeichert, wobei auch eine Zeitinformation über die Aufnahmezeitpunkte der zweiten Bilder im Datenspeicher abgelegt ist. Der zweite Aufnahmebereich unterscheidet sich beispielsweise in der Größe und/oder in einem Winkel, mit dem die zweite Kamera auf das Fahrzeug ausgerichtet ist. Der Aufnahmebereich und der zweite Aufnahmebereich können überlappen. Der zweite Aufnahmebereich kann so gewählt sein, dass das Fahrzeug von vorne aufgenommen wird. Zudem wird mithilfe des Sensors oder mithilfe eines zweiten Sensors ein zweiter Ankunftszeitpunkt des fahrenden Fahrzeuges im zweiten Aufnahmebereich ermittelt. Anhand des zweiten Ankunftszeitpunktes wird wenigstens ein zweites Bild ausgewählt, das im Datenspeicher gespeichert ist, und das in einem Zeitbereich um den zweiten Ankunftszeitpunkt aufgenommen wurde. Der Zeitbereich kann einen Bereich zeitlich früher und einen Bereich zeitlich später zum zweiten Ankunftszeitpunkt umfassen. Zudem kann der Zeitbereich auch nur einen Bereich umfassen, der zeitlich früher oder der zeitlich später als der zweite Ankunftszeitpunkt ist.

Anhand des wenigstens einen ausgewählten zweiten Bildes wird eine zweite Anzahl von Personen im Fahrzeug ermittelt. Abhängig von der ermittelten Anzahl der Personen im Fahrzeug aufgrund der ersten Bilder der Kamera und der ermittelten zweiten Anzahl der Personen im Fahrzeug aufgrund der zweiten Bilder der zweiten Kamera wird eine Anzahl der Personen im Fahrzeug ermittelt. Dabei können die ersten und die zweiten Bilder beispielsweise in der Weise berücksichtigt werden, dass die größte Anzahl der ermittelten Personen der ersten und/oder der zweiten Bilder als Anzahl der Personen im Fahrzeug ermittelt und ausgegeben wird.

Durch die Verwendung der zweiten Kamera und der zweiten Bilder wird zum einen eine Redundanz für die Erfassung der Bilder und eine Redundanz für den Aufnahmebereich bereitgestellt. Die zweiten Bilder der zweiten Kamera werden analog und insbesondere zusätzlich zu den ersten Bildern der ersten Kamera für die Ermittlung der Anzahl der Personen im Fahrzeug verwendet.

Es wird eine Vorrichtung zum Ermitteln einer Anzahl von Personen in einem Fahrzeug vorgeschlagen. Die Vorrichtung umfasst eine Kamera, einen Datenspeicher, einen Sensor und wenigstens eine Recheneinheit. Die Kamera ist ausgebildet, um zeitlich nacheinander mehrere Bilder von einem Aufnahmebereich zu machen. Die Bilder werden in dem Datenspeicher gespeichert. Zudem werden im Datenspeicher Zeitinformationen für die Bilder abgelegt, die die Aufnahmezeitpunkte der Bilder angibt. Der Sensor ist ausgebildet, um eine relative Position des Fahrzeuges gegenüber dem Sensor zu erfassen. Die Recheneinheit und/oder der Sensor sind ausgebildet, um eine Geschwindigkeit des Fahrzeuges zu berechnen. Die Recheneinheit ist zudem ausgebildet, um abhängig von der der Geschwindigkeit des Fahrzeuges und einer Entfernung des Fahrzeuges vom Aufnahmebereich einen Ankunftszeitpunkt des Fahrzeuges im Aufnahmebereich zu ermitteln. Der Ankunftszeitpunkt legt den Zeitpunkt fest, zu dem das fahrende Fahrzeug den Aufnahmebereich erreichen wird. Der Aufnahmebereich definiert einen Bereich, der von der Kamera bei der Aufnahme eines Bildes wenigstens teilweise erfasst wird. Die Recheneinheit oder die Kamera sind ausgebildet, um wenigstens ein Bild aus dem Datenspeicher auszuwählen, das in einem Zeitbereich um den Ankunftszeitpunkt aufgenommen wurde. Abhängig von der gewählten Ausführungsform kann die Kamera oder die Recheneinheit auch ein zum Ankunftszeitpunkt aufgenommenes Bild auswählen. Zudem ist die Recheneinheit ausgebildet, um anhand des wenigstens einem ausgewählten Bildes die Anzahl der Personen im Fahrzeug zu ermitteln. Dazu können Bilderkennungsverfahren, insbesondere eine Künstliche Intelligenz, verwendet werden. Die Künstliche Intelligenz kann beispielsweise als trainiertes neuronales Netz ausgebildet sein.

In einer weiteren Ausführungsform ist die Kamera ausgebildet, die Bilder des Aufnahmebereiches zu Aufnahmezeitpunkten, insbesondere mit gleichen zeitlichen Abständen zwischen den Aufnahmezeitpunkten, aufzunehmen. Zudem kann eine Lichtquelle vorgesehen sein, wobei die Lichtquelle ausgebildet ist, um den Aufnahmebereich zu den Aufnahmezeitpunkten zu beleuchten. Die Lichtquelle ist beispielsweise ausgebildet, um eine elektromagnetische Strahlung mit einer Wellenlänge zwischen 720 nm und 750 nm, insbesondere zwischen 730 nm und 735 nm, abzugeben. Abhängig von der gewählten Ausführungsform kann die Lichtquelle auch elektromagnetische Strahlung mit einer anderen Wellenlänge abgeben, die auch kleiner als 720 nm oder auch größer als 750 nm ist.

In einer weiteren Ausführungsform ist die Lichtquelle ausgebildet, um die elektromagnetische Strahlung mit einer hohen Leistung, insbesondere mit einer Lichtleistung von wenigstens 1.000.000 Lumen, insbesondere von wenigstens 2.000.000 Lumen oder mehr, abzugeben. Die Lichtquelle ist ausgebildet, um die elektromagnetische Strahlung mit einer Beleuchtungszeit von weniger als 70 µs, insbesondere von weniger als 60 µs oder von weniger als 30 µs, abzugeben. Die Beleuchtungszeit legt den Zeitraum fest, zu dem die Lichtquelle die elektromagnetische Strahlung mit einer Leistung von mehr als 10% der maximalen beziehungsweise der durchschnittlichen Lichtleistung der Lichtquelle abgibt. Aufgrund der kurzen Beleuchtungszeit der Lichtquelle ist die Lichtquelle geeignet, die elektromagnetische Strahlung gepulst und insbesondere zu den Aufnahmezeitpunkten der Kamera abzugeben.

Je kürzer die Beleuchtungszeit der Lichtquelle ist, umso geringer sind die Beeinträchtigungen für die Personen des Fahrzeuges und insbesondere für den Fahrer des Fahrzeuges in Bezug auf eine Blendwirkung durch die Lichtquelle. Zudem ist der Stromverbrauch durch das gepulste Betreiben der Lichtquelle deutlich reduziert.

In einer weiteren Ausführungsform ist die Kamera ausgebildet, um Bilder mit einer Aufnahmerate von mehr als 40 Bildern pro Sekunde, insbesondere von mehr als 60 Bildern pro Sekunde und vorzugsweise von mehr als 75 Bildern pro Sekunde, aufzunehmen und im Datenspeicher zu speichern. Je geringer die Belichtungszeit der Kamera für ein Bild ist, umso geringer sind Störeinflüsse durch eine natürliche oder künstliche zusätzliche Beleuchtung, die sich im Laufe des Tages ändern kann. Weiterhin wird durch eine hohe Aufnahmerate die Wahrscheinlichkeit erhöht, dass von einem Innenraum des Fahrzeuges mehrere Bilder aufgenommen werden, während das Fahrzeug den Aufnahmebereich durchfährt. Somit stehen mehrere Bilder zum Erkennen der Anzahl der Personen, die sich im Fahrzeug befinden, zur Verfügung.

In einer weiteren Ausführungsform ist die Recheneinheit ausgebildet, ein Programm in Form einer Künstlichen Intelligenz, insbesondere in Form eines trainierten neuronalen Netzes, auszuführen. Die Künstliche Intelligenz ist ausgebildet, das wenigstens eine ausgewählte Bild dahingehend auszuwerten, wie viele Personen in dem ausgewählten Bild im Fahrzeug erkennbar sind. Zudem ist die Recheneinheit ausgebildet, die erkannte Anzahl an Personen im Bild als Anzahl der Personen im Fahrzeug auszugeben. Durch die Verwendung einer Künstlichen Intelligenz, insbesondere die Verwendung eines trainierten neuronalen Netzes, kann eine schnelle und zuverlässige Ermittlung der in den Bildern dargestellten Personen, die sich im Fahrzeug befinden, erreicht werden.

In einer weiteren Ausführungsform ist die Recheneinheit und/oder die Kamera ausgebildet, mehrere im Datenspeicher gespeicherte Bilder in einem Zeitbereich um den Ankunftszeitpunkt auszuwählen. Die Recheneinheit ist beispielsweise ausgebildet, um zwei bis zehn Bilder oder mehr Bilder in dem Zeitbereich um den Ankunftszeitpunkt aus dem Datenspeicher auszuwählen.

Zudem ist die Künstliche Intelligenz ausgebildet, die Anzahl der erkannten Personen anhand der ausgewählten Bilder zu ermitteln. Beispielsweise kann die Künstliche Intelligenz ausgebildet sein, die größte ermittelte Anzahl der Personen der ausgewählten Bilder als Anzahl der Personen des Fahrzeuges zu ermitteln und auszugeben.

In einer weiteren Ausführungsform ist die Recheneinheit ausgebildet, um Bilder einer zweiten Kamera, die zweite Bilder eines zweiten Aufnahmebereichs macht, auszuwerten und aufgrund der zweiten Bilder die Anzahl der Personen im Fahrzeug zu ermitteln. Dazu können die zweiten Bilder der zweiten Kamera in der gleichen Weise wie die Bilder der ersten Kamera verarbeitet und ausgewertet werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
FIG 1 eine schematische Darstellung einer Vorrichtung zum Ermitteln einer Anzahl von Personen in einem fahrenden Fahrzeug,
FIG 2 ein Beispiel für ein Bild einer Kamera,
FIG 3 eine schematische Darstellung eines Datenspeichers mit mehreren zeitlich nacheinander aufgenommenen Bildern, und
FIG 4 einen schematischen Ablauf zum Durchführen des Verfahrens zum Ermitteln einer Anzahl von Personen in einem fahrenden Fahrzeug.

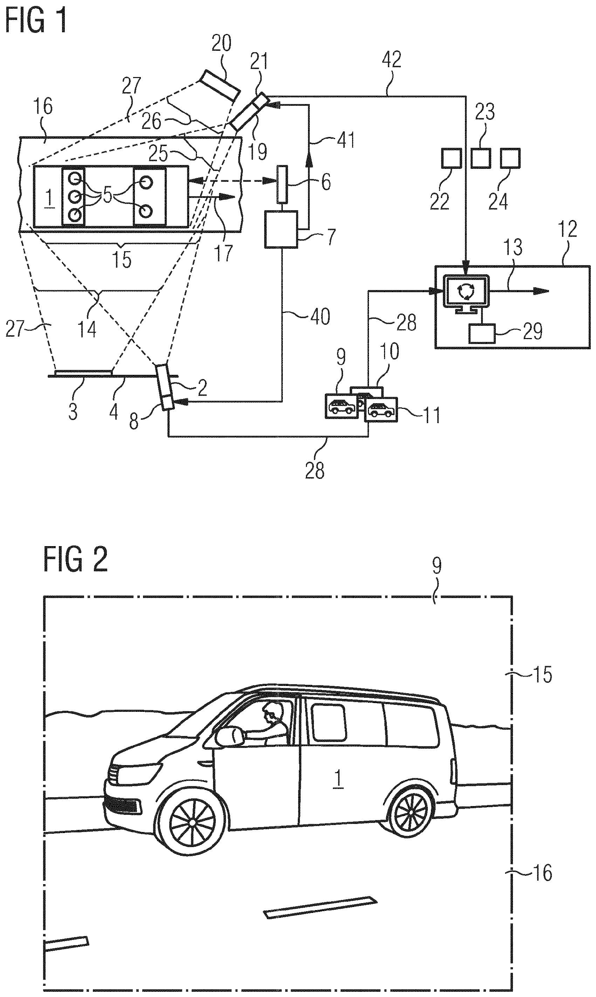

FIG 1 zeigt in einer schematischen Darstellung eine Vorrichtung zum Ermitteln einer Anzahl von Personen in einem fahrenden Fahrzeug. Es ist eine Kamera 2 vorgesehen, die ausgebildet ist, um Bilder eines Aufnahmebereichs 15 aufzunehmen. Der Aufnahmebereich 15 befindet sich im Bereich einer Straße 16. Auf der Straße 16 bewegt sich ein Fahrzeug 1 in einer Fahrtrichtung 17. Im Fahrzeug 1 befinden sich mehrere Personen 5. Optional kann eine Lichtquelle 3 vorgesehen sein, die in einem Beleuchtungsbereich 14 eine elektromagnetische Strahlung abgibt. Es kann jedoch auch auf die Lichtquelle 3 verzichtet werden. Der Beleuchtungsbereich 14 kann wenigstens einen Teilbereich des Aufnahmebereichs 15 oder mindestens den Aufnahmebereich 15 der Kamera 2 umfassen. Beispielsweise kann der Beleuchtungsbereich 14 der Lichtquelle 3 den gesamten Aufnahmebereich 15 umfassen.

Die Lichtquelle 3 kann elektromagnetische Strahlung 27 mit einer Wellenlänge zwischen 720 nm und 750 nm, insbesondere zwischen 730 nm und 735 nm, abgeben. Abhängig von der gewählten Ausführungsform kann die Lichtquelle auch elektromagnetische Strahlung mit anderen Wellenlängen abgeben. Abhängig von der gewählten Ausführungsform kann die Lichtquelle eine elektromagnetische Strahlung mit einer Strahlungsleistung von wenigstens 1.000.000 Lumen, insbesondere von wenigstens 2.000.000 Lumen oder mehr, abgeben. Weiterhin kann die Lichtquelle ausgebildet sein, um die elektromagnetische Strahlung gepulst, vorzugsweise mit einer Beleuchtungszeit von weniger als 70 µs, insbesondere weniger als 50 µs oder weniger als 35 µs, abzugeben. Zudem ist die Lichtquelle 3 vorzugsweise ausgebildet, um die elektromagnetische Strahlung gepulst zu Aufnahmezeitpunkten der Kamera abzugeben. Dazu kann die Kamera 2 über eine Steuerleitung 4 mit der Lichtquelle 3 verbunden sein und die Lichtquelle 3 in der Weise ansteuern, dass der Aufnahmebereich 15 zu den Aufnahmezeitpunkten der Kamera von der Lichtquelle 3 beleuchtet wird.

Die Kamera 2 ist vorzugsweise ausgebildet, um zeitlich nacheinander mehrere Bilder von dem Aufnahmebereich 15 zu machen. Die Bilder werden vorzugsweise in gleichen Zeitabständen von der Kamera aufgenommen und in einem Datenspeicher 8 abgespeichert. Vorzugsweise nimmt die Kamera 2 kontinuierlich Bilder, insbesondere in festgelegten oder vorgebbaren Zeitabständen zu Aufnahmezeitpunkten auf und speichert die aufgenommenen Bilder zusätzlich mit einer Information über die Aufnahmezeitpunkte der Bilder im Datenspeicher 8 ab. Die Zeitinformation über den Aufnahmezeitpunkt kann auch indirekt oder nur in festgelegten Zeitabständen festgelegt sein. Beispielsweise wird ein Ringdatenspeicher als Datenspeicher 8 verwendet, in dem die von der Kamera aufgenommenen Bilder der Reihe nach abgespeichert werden. Dabei können die Zeitpunkte der Aufnahmen nur in festgelegten Zeitabständen festgelegt werden.

Somit kann die Kamera 2 Bilder aufnehmen, in denen im Aufnahmebereich 15, d.h. in einem Bild kein Fahrzeug, nur ein Teil eines Fahrzeuges oder auch ein gesamtes Fahrzeug abgebildet ist. Beispielsweise ist die Kamera ausgebildet, um Bilder mit einer Aufnahmerate von mehr als 40 Bildern pro Sekunde, von mehr als 60 oder 75 Bildern pro Sekunde aufzunehmen und im Datenspeicher 8 abzuspeichern. Abhängig von der gewählten Ausführungsform kann der Datenspeicher 8 auch unabhängig von der Kamera 2 ausgebildet und angeordnet sein. Zudem ist ein Sensor 6 vorgesehen, der in Richtung der Straße 16 ausgerichtet ist und ein Fahrzeug 1 und dessen relative Position beziehungsweise dessen relativen Abstand zum Sensor 6 erfassen kann. Der Sensor 6 kann beispielsweise mithilfe eines Laserstrahls einen relativen Abstand des Fahrzeuges zum Sensor 6 erfassen. Der Sensor 6 ist vorzugsweise in Fahrtrichtung 17 des Fahrzeuges gesehen vor dem Fahrzeug 1 angeordnet.

Weiterhin ist eine Recheneinheit 7 vorgesehen, die über eine Datenleitung oder drahtlos mit dem Sensor 6 in Verbindung steht. Der Sensor 6 übermittelt die Abstände des Fahrzeuges 1 zum Sensor 6 in vorgegebenen Zeitabständen und übermittelt diese Information an die Recheneinheit 7. Zudem kann der Sensor 6 die Geschwindigkeit des Fahrzeuges berechnen und an die Recheneinheit 7 übermitteln. Die Recheneinheit 7 kennt den Abstand zwischen dem Aufnahmebereich 15 beziehungsweise zwischen einem Mittelpunkt des Aufnahmebereichs 15 und dem Sensor 6. In der Regel erfasst der Sensor 6 das Fahrzeug 1 in einem Zustand, bei dem das Fahrzeug 1 sich noch nicht im Aufnahmebereich 15 befindet. Durch eine Messung mithilfe eines Lasersignals kann der Sensor 6 die Geschwindigkeit des Fahrzeuges ermitteln. Zudem könnte die Recheneinheit 7 durch eine zeitliche Änderung des Abstandes des Fahrzeuges gegenüber dem Sensor die Geschwindigkeit des Fahrzeuges 1 berechnen, mit dem sich das Fahrzeug 1 in Richtung auf den Aufnahmebereich 15 zubewegt. Weiterhin kann die Recheneinheit 7 aus dem gemessenen Abstand zwischen dem Fahrzeug 1 und dem Sensor 6 und dem bekannten Abstand zwischen einem Mittelpunkt des Aufnahmebereichs 15 und dem Sensor 6 und der ermittelten Geschwindigkeit des Fahrzeuges einen Ankunftszeitpunkt des Fahrzeuges im Aufnahmebereich 15 berechnen.

Da die Kamera 2 laufend Bilder vom Aufnahmebereich aufnimmt und diese im Datenspeicher 8 mit einer Zeitinformation über den Aufnahmezeitpunkt ablegt, kann die Recheneinheit 7 Bilder aus dem Datenspeicher 8 auswählen, die im Bereich des Ankunftszeitpunktes des Fahrzeuges aufgenommen wurden. Dazu ist die Zeitinformation der Kamera beziehungsweise die Zeitinformation der gespeicherten Bilder des Datenspeichers 8 und die Zeitinformation der Recheneinheit 7 synchronisiert. Die Recheneinheit 7 kann den Ankunftszeitpunkt des Fahrzeuges im Aufnahmebereich über eine weitere Datenleitung 40 an die Kamera 2 übermitteln. Die weitere Datenleitung 40 kann in Form einer Leitung oder drahtlos ausgebildet sein.

Abhängig von der gewählten Ausführungsform wählt die Recheneinheit 7 über die Datenleitung 40 oder die Kamera 2 selbst ein oder mehrere Bilder in einem vorgegebenen Zeitbereich um den Ankunftszeitpunkt des Fahrzeuges aus. Im dargestellten Ausführungsbeispiel werden ein erstes, ein zweites und ein drittes Bild 9, 10, 11 ausgewählt und vom Datenspeicher 8 über eine Datenleitung 28 oder drahtlos an eine zweite Recheneinheit 12 beziehungsweise einen Datenspeicher der zweiten Recheneinheit 12 übermittelt. Abhängig von der gewählten Ausführungsform können die Recheneinheit 7 und die zweite Recheneinheit 12 in Form einer einzigen Recheneinheit oder in Form eines Computernetzwerkes ausgebildet sein.

Die zweite Recheneinheit 12 kann ein Display aufweisen, das beispielsweise die ausgewählten Bilder 9, 10, 11 auf dem Display gleichzeitig oder nacheinander darstellt. Bei dieser Ausführungsform kann eine Bedienperson die Anzahl der auf den Bildern dargestellten Personen zählen und über Eingabemittel in die Recheneinheit 12 beziehungsweise einen Datenspeicher der zweiten Recheneinheit 12 eingeben.

In einer weiteren Ausführungsform verfügt die zweite Recheneinheit 12 über Programme zur Bildauswertung, mit denen Personen in einem Bild erkannt werden können und eine Anzahl der im Fahrzeug befindlichen Personen gezählt werden kann. Beispielsweise verfügt die Recheneinheit über ein Programm in Form einer Künstlichen Intelligenz, insbesondere in Form eines trainierten neuronalen Netzes. Die Künstliche Intelligenz ist in der Weise ausgebildet, dass die Künstliche Intelligenz mithilfe von Bilderkennungsverfahren Personen in einem ausgewählten Bild erkennt und die Anzahl der Personen in dem ausgewählten Bild im Fahrzeug zählen kann. Die Künstliche Intelligenz gibt die im Bild erkannte Anzahl an Personen im Innenraum des Fahrzeuges als Anzahl der Personen im Fahrzeug aus.

Die Ausgabe kann in Form einer Übermittlung über einen Datenausgang 13 an eine weitere Recheneinheit erfolgen. Zudem kann die Anzahl der Personen auf einem Display dargestellt oder in einem weiteren Datenspeicher 29 abgespeichert werden. Die Anzahl der ermittelten Personen eines Fahrzeuges können mit zusätzlichen Informationen wie beispielsweise einer Uhrzeit, zu der das Bild aufgenommen wurde, einer Geschwindigkeit des Fahrzeuges, einem Typ des Fahrzeuges, einem Nummernschild des Fahrzeuges abgespeichert werden. Das Nummernschild des Fahrzeuges kann beispielsweise mit einer weiteren Kamera oder mit der Kamera 2 erfasst werden. Zudem können die weiteren Daten des Fahrzeuges zusammen mit der Anzahl der Personen auch über den Ausgang 13 an eine weitere Recheneinheit 30 übermittelt werden.

Abhängig von der gewählten Ausführungsform kann eine zweite Kamera 19 mit einem zweiten Datenspeicher 21 vorgesehen sein. Die zweite Kamera 19 ist ausgebildet, um von einem zweiten Aufnahmebereich 25 der Straße 16 zeitlich nacheinander weitere Bilder aufzunehmen. Weiterhin kann eine zweite Lichtquelle 20 vorgesehen sein, die den zweiten Aufnahmebereich 25 in einem zweiten Beleuchtungsbereich 26 wenigstens teilweise, insbesondere vollständig, ausleuchtet. Die technischen Daten der zweiten Kamera 19 können gleich oder identisch zu den technischen Daten der Kamera 2 sein. Die technischen Daten der zweiten Lichtquelle 20 können identisch oder gleich zu den technischen Daten der Lichtquelle 3 sein. Die zweite Kamera 19 ist ausgebildet, um weitere Bilder 22, 23, 24 vom zweiten Aufnahmebereich 25 vorzugsweise kontinuierlich in vorgegebenen Zeitabständen aufzunehmen und mit Informationen über die Aufnahmezeitpunkte der weiteren Bilder in dem zweiten Datenspeicher 21 abzuspeichern. Die Recheneinheit 7 kann den zweiten Ankunftszeitpunkt des Fahrzeuges im zweiten Aufnahmebereich 25 über eine zweite Datenleitung 41 an die zweite Kamera 19 übermitteln. Die zweite Datenleitung 41 kann in Form einer Leitung oder drahtlos ausgebildet sein. Zudem sind die Recheneinheit 7 und/oder die zweite Kamera 19 ausgebildet, um weitere Bilder 22, 23, 24 im Bereich des zweiten Ankunftszeitpunktes des Fahrzeuges im zweiten Aufnahmebereich 25 auszuwählen und aus dem zweiten Datenspeicher 21 über eine dritte Datenleitung 42 zur zweiten Recheneinheit 12 beziehungsweise dessen weiteren Datenspeicher 29 zu übertragen. Die Datenleitungen können in Form von elektrischen Leitungen oder drahtlos ausgebildet sein.

Die Recheneinheit 7 kennt den Abstand zwischen dem zweiten Aufnahmebereich 25 beziehungsweise zwischen einem Mittelpunkt des zweiten Aufnahmebereichs 25 und dem Sensor 6. In der Regel erfasst der Sensor 6 das Fahrzeug 1 in einem Zustand, bei dem das Fahrzeug 1 sich noch nicht im zweiten Aufnahmebereich 25 befindet. Der Sensor und/oder die die Recheneinheit 7 berechnen die Geschwindigkeit des Fahrzeuges 1, mit dem sich das Fahrzeug 1 in Richtung auf den zweiten Aufnahmebereich 25 zubewegt. Weiterhin kann die Recheneinheit 7 aus dem gemessenen Abstand zwischen dem Fahrzeug 1 und dem Sensor 6 und dem bekannten Abstand zwischen einem Mittelpunkt des zweiten Aufnahmebereichs 25 und dem Sensor 6 und der ermittelten Geschwindigkeit des Fahrzeuges einen zweiten Ankunftszeitpunkt des Fahrzeuges im zweiten Aufnahmebereich 25 berechnen.

Da die zweite Kamera 2 laufend Bilder vom zweiten Aufnahmebereich 25 aufnimmt und diese im zweiten Datenspeicher 21 mit einer Zeitinformation über den Aufnahmezeitpunkt ablegt, kann die Recheneinheit 7 Bilder aus dem zweiten Datenspeicher 21 auswählen, die im Bereich des zweiten Ankunftszeitpunktes des Fahrzeuges aufgenommen wurden. Dazu ist die Zeitinformation der Kamera beziehungsweise die Zeitinformation der gespeicherten weiteren Bilder des zweiten Datenspeichers 21 und die Zeitinformation der Recheneinheit 7 bekannt beziehungsweise synchronisiert.

Abhängig von der gewählten Ausführungsform wählt die Recheneinheit 7 ein oder mehrere weitere Bilder in einem vorgegebenen Zeitbereich um den zweiten Ankunftszeitpunkt des Fahrzeuges im zweiten Aufnahmebereich aus. Im dargestellten Ausführungsbeispiel werden ein erstes, ein zweites und ein drittes weiteres Bild 22, 23, 24 ausgewählt und vom zweiten Datenspeicher 21 über eine weitere Datenleitung oder drahtlos an die zweite Recheneinheit 12 beziehungsweise einen weiteren Datenspeicher 29 der zweiten Recheneinheit 12 übermittelt.

Vorzugsweise ist die Lichtquelle 3 in der Weise angeordnet, dass eine Abstrahlrichtung der Lichtquelle 3 ungefähr 90° zu der Fahrtrichtung 17 des Fahrzeuges 1 ausgerichtet ist. Vorzugsweise ist die Abstrahlrichtung der Lichtquelle 3 für die elektromagnetische Strahlung in einem Winkel von 90° zur Fahrtrichtung 17 ausgerichtet. Die Ausrichtung kann zudem anstelle auf die Fahrtrichtung 17 des Fahrzeuges 1 senkrecht zu einer Längserstreckung der Straße 16 ausgerichtet sein.

Die Kamera 2 kann beispielsweise einen Winkel von 70° bis 90° mit einer zentralen Aufnahmeachse zur Fahrtrichtung 17 ausgerichtet sein. Die Aufnahmeachse steht senkrecht zur Bildebene der Kamera 2.

Vorzugsweise ist die zweite Lichtquelle 20 in der Weise angeordnet, dass eine Abstrahlrichtung der zweiten Lichtquelle 20 in einem Winkel kleiner als 45° zu der Fahrtrichtung 17 des Fahrzeuges 1 ausgerichtet ist. Beispielsweise ist die Abstrahlrichtung der zweiten Lichtquelle 20 für die elektromagnetische Strahlung parallel zur Fahrtrichtung 17 ausgerichtet.

Die zweite Kamera 19 kann beispielsweise einen Winkel von 0° bis 45° mit einer zentralen Aufnahmeachse zur Fahrtrichtung 17 ausgerichtet sein. Die Aufnahmeachse steht senkrecht zur Bildebene der zweiten Kamera 19. Die zweite Kamera 19 ist angeordnet, um im Wesentlichen von vorne Bilder vom Fahrzeug 1 zu machen.

Der erste und/oder der zweite Aufnahmebereich 15, 25 können in einer einfachen Ausführung durch einen Punkt auf der Straße realisiert sein. Befindet sich das Fahrzeug mit einer Front der Karosserie über dem Punkt, dann hat das Fahrzeug den Aufnahmebereich erreicht.

FIG 2 zeigt in einer schematischen Darstellung beispielhaft ein Bild, das von der Kamera 2 oder von der zweiten Kamera aufgenommen wurde. Das Bild zeigt den Aufnahmebereich 15 beziehungsweise den zweiten Aufnahmebereich. In dem dargestellten Bild ist das Fahrzeug 1 in einer Seitenansicht zu erkennen.

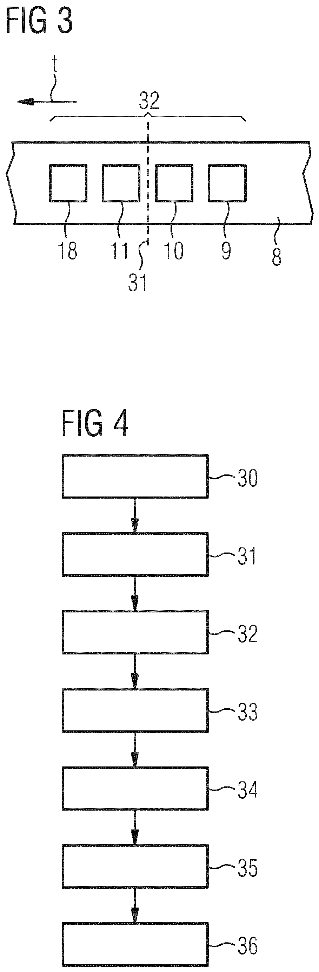

FIG 3 zeigt in einer schematischen Darstellung den Datenspeicher 8 mit zeitlich nacheinander aufgenommenen Bildern 9, 10, 11, 18. Es können auch mehr oder weniger Bilder aufgenommen und im Datenspeicher 8 abgelegt werden. Zudem ist in zeitlicher Darstellung zwischen dem zweiten Bild 10 und dem dritten Bild 11 der Ankunftszeitpunkt 31 des Fahrzeuges im Aufnahmebereich 15 in Form einer gestrichelten Linie dargestellt. Zudem ist in Form einer geschwungenen Linie symmetrisch um den Ankunftszeitpunkt 31 verteilt der Zeitbereich 32 dargestellt, in dem die abgespeicherten Bilder 9, 10, 11, 18 für die Ermittlung der Anzahl der Personen ausgewählt werden. Im dargestellten Ausführungsbeispiel werden das erste, das zweite, das dritte und das vierte Bild 9, 10, 11, 18 ausgewählt und an die zweite Recheneinheit 12 übermittelt.

In analoger Weise können auch die weiteren Bilder der zweiten Kamera in dem zweiten Datenspeicher abgelegt und mit einer Information über die Aufnahmezeitpunkte versehen sein. Die weiteren Bilder werden in einem Zeitbereich um den zweiten Aufnahmezeitpunkt ausgewählt und an die zweite Recheneinheit 12 übermittelt.

FIG 4 zeigt in einer schematischen Darstellung ein Verfahren zum Ermitteln einer Anzahl von Personen in einem fahrenden Fahrzeug. Bei dem beschriebenen Verfahren werden zwei Kameras verwendet. In einer einfachen Ausführung kann auf die zweite Kamera auch verzichtet werden. Bei Programmpunkt 30 nimmt die Kamera 2 und/oder die zweite Kamera 19 zeitlich nacheinander mehrere Bilder von dem Aufnahmebereich 15 beziehungsweise dem zweiten Aufnahmebereich 25 auf. Die Bilder der ersten Kamera werden mit einer Information über den Aufnahmezeitpunkt bei Programmpunkt 31 in einem Datenspeicher 8 gespeichert. Die weiteren Bilder der zweiten Kamera werden ebenfalls mit einer Information über den Aufnahmezeitpunkt in dem zweiten Datenspeicher 21 bei Programmpunkt 31 gespeichert. Abhängig von der gewählten Ausführungsform können der Datenspeicher 8 und der zweite Datenspeicher 21 als gemeinsamer Datenspeicher ausgebildet sein, der zudem unabhängig und separat von den Kameras 2, 19 ausgebildet und angeordnet ist.

Parallel zu den laufenden Aufnahmen der Kameras werden bei Programmpunkt 32 mithilfe des Sensors 6 der Abstand des Fahrzeuges vom Sensor und die Geschwindigkeit des Fahrzeuges mithilfe eines Lasersignals gemessen. Der Abstand und die Geschwindigkeit des Fahrzeuges werden vom Sensoran die Recheneinheit 7 übermittelt. Die Recheneinheit 7 berechnet bei dem folgenden Programmpunkt 32 aufgrund der Geschwindigkeit des Fahrzeuges, dem Abstand zwischen Sensor und Fahrzeug, und dem bekannten Abstand zwischen Sensor und Aufnahmebereich einen Ankunftszeitpunkt, zu dem das Fahrzeug den Aufnahmebereich 15 erreichen wird. Zudem kann die Recheneinheit 7 einen zweiten Ankunftszeitpunkt, zu dem das Fahrzeug den zweiten Aufnahmebereich 25 erreichen wird. Die Recheneinheit 7 kennt den Abstand zwischen dem Sensor 6 und dem Aufnahmebereich 15 und den Abstand zwischen dem Sensor 6 und dem zweiten Aufnahmebereich 25. Zudem kennt die Recheneinheit 7 die Geschwindigkeit des Fahrzeuges und den Abstand zwischen dem Sensor 6 und dem Fahrzeug.

Somit kann die Recheneinheit 7 die Ankunftszeit des Fahrzeuges im Aufnahmebereich 15 und/oder die zweite Ankunftszeit des Fahrzeuges im zweiten Aufnahmebereich 25 ermitteln, da sich das Fahrzeug in Richtung auf den Aufnahmebereich 15, den zweiten Aufnahmebereich 25 und den Sensor 6 bewegt.

Bei einem folgenden Programmpunkt 33 kann die Recheneinheit 7 die berechnete Ankunftszeit an die Kamera 2 übermitteln. Abhängig von der gewählten Ausführungsform kann die Kamera 2 oder die Recheneinheit 7 auf den Datenspeicher 8 zugreifen. Die Kamera 2 oder die Recheneinheit 7 wählen bei einem folgenden Programmpunkt 33 wenigstens ein Bild, insbesondere mehrere Bilder, die im Bereich der Ankunftszeit aufgenommen wurden, aus dem Datenspeicher 8 aus. Die ausgewählten Bilder werden bei einem folgenden Programmpunkt 34 an die zweite Recheneinheit 12 übermittelt. Bei Programmpunkt 33 kann die Recheneinheit 7 auch die berechnete zweite Ankunftszeit an die zweite Kamera 19 übermitteln. Abhängig von der gewählten Ausführungsform kann die zweite Kamera 19 oder die Recheneinheit 7 auf den zweiten Datenspeicher 21 zugreifen. Die zweite Kamera 19 oder die Recheneinheit 7 wählen bei dem Programmpunkt 33 wenigstens ein, insbesondere mehrere weitere Bilder, die im Bereich der zweiten Ankunftszeit aufgenommen wurden, aus dem zweiten Datenspeicher 21 aus und die ausgewählten weiteren Bilder werden bei dem Programmpunkt 34 an die zweite Recheneinheit 12 übermittelt.

Bei einem darauffolgenden Programmpunkt 35 ermittelt die zweite Recheneinheit 12 anhand des wenigstens einen übermittelten Bildes beispielsweise mithilfe von Bilderkennungsverfahren Personen, die sich auf dem Bild im Innenraum des Fahrzeuges befinden. Zudem wird die Anzahl der Personen, die im Bild erkennbar ist, bei Programmpunkt 36 als Anzahl der Personen, die sich im Fahrzeug befinden, auf einem Display angezeigt oder über eine Datenschnittstelle ausgegeben.

Abhängig von der gewählten Ausführungsform werden der Aufnahmebereich 15 und/oder der zweite Aufnahmebereich 25 von der Lichtquelle 3 beziehungsweise der zweiten Lichtquelle 20 in einem Beleuchtungsbereich 14 beziehungsweise einem zweiten Beleuchtungsbereich 26 mit elektromagnetischer Strahlung beleuchtet.

Die erste und/oder die zweite Kamera 2, 19 nehmen die Bilder kontinuierlich und insbesondere mit einer hohen Aufnahmerate von mehr als 40 Bildern pro Sekunde, beispielsweise mehr als 60 Bildern pro Sekunde oder mehr als 75 Bildern pro Sekunde, auf.

Die Lichtquelle 3 und/oder die zweite Lichtquelle 20 sind ausgebildet, um elektromagnetische Strahlung abzugeben, wobei die elektromagnetische Strahlung insbesondere eine Wellenlänge zwischen 720 nm und 750 nm, insbesondere zwischen 730 nm und 735 nm, aufweist. Zudem sind die Lichtquelle 3 und/oder die zweite Lichtquelle 20 ausgebildet, um elektromagnetische Strahlung mit einer Strahlungsleistung von wenigstens 1.000.000 Lumen, insbesondere von wenigstens 2.000.000 Lumen oder mehr, abzugeben. Zudem sind die Lichtquelle 3 und/oder die zweite Lichtquelle 20 ausgebildet, um die elektromagnetische Strahlung als gepulste Strahlung mit einer Beleuchtungszeit von weniger als 70 µs, insbesondere weniger als 50 µs oder weniger als 35 µs, abzustrahlen. Die Beleuchtungszeit definiert die Abstrahlung der elektromagnetischen Strahlung mit wenigstens 10% oder mehr der maximalen Strahlungsleistung der Lichtquelle.

Abhängig von der gewählten Ausführungsform werden bei Programmpunkt 33 zwei bis zehn Bilder in einem Zeitbereich um den Ankunftszeitpunkt des Fahrzeuges im Aufnahmebereich aus dem Datenspeicher beziehungsweise um den zweiten Ankunftszeitpunkt im zweiten Aufnahmebereich aus dem zweiten Datenspeicher ausgewählt. Je mehr Bilder verwendet werden, umso höher ist die Wahrscheinlichkeit, dass die Anzahl der Personen präzise ermittelt wird. Jedoch ist gleichzeitig die Verarbeitungszeit für die Auswertung der Bilder umso höher, je größer die Anzahl der auszuwertenden Bilder ist. Versuche haben gezeigt, dass eine Anzahl von zwei bis zehn Bildern einen guten Kompromiss zwischen einer hohen Genauigkeit für die Erkennung der richtigen Anzahl der Personen im Fahrzeug und einer kurzen Verarbeitungszeit darstellt.

Die Bilderkennung bei Programmpunkt 34 wird beispielsweise von einer Künstlichen Intelligenz, insbesondere von einem trainierten neuronalen Netz, ausgeführt. Das trainierte neuronale Netz wurde vorab in der Weise trainiert, dass es aufgrund von Bildern mit Fahrzeugen eine Anzahl von Personen im Fahrzeug richtiger mitteilen kann.

Auch bei der Verwendung einer Künstlichen Intelligenz wird die Genauigkeit der richtigen Ermittlung der Personen im Fahrzeug erhöht, wenn mehr Bilder ausgewertet werden. Jedoch nimmt auch dabei die Bearbeitungszeit zu.

Weiterhin wird das beschriebene Verfahren dahingehend verbessert, wenn weitere Bilder der zweiten Kamera von dem zweiten Aufnahmebereich zusätzlich zu den Bildern der Kamera des Aufnahmebereichs ausgewertet werden. Dabei können verschiedene Strategien verwendet werden, um die Bilder der zwei Kameras auszuwerten. In einem einfachen Fall wird die Anzahl der Personen durch die maximal erkannte Anzahl der Personen im Fahrzeug eines Bildes der Kamera 2 oder eines weiteren Bildes der zweiten Kamera 19 festgelegt.

Abhängig von der gewählten Ausführungsform können die Ankunftszeiten des Fahrzeuges für die Ankunft im Aufnahmebereich 15 unterschiedlich zu der Ankunftszeit im zweiten Aufnahmebereich 25 der zweiten Kamera 19 sein. Zudem können sich die Betrachtungswinkel und auch die Größen des Aufnahmebereichs 15 und des zweiten Aufnahmebereichs 25 unterscheiden. Weiterhin können die Kamera 2 und die zweite Kamera 19 mit unterschiedlichen Verschlusszeiten die Bilder aufnehmen. Zudem können die Lichtquelle 3 und die zweite Lichtquelle 20 elektromagnetische Strahlung mit unterschiedlichen Wellenlängen abgeben.

Abhängig von der gewählten Ausführungsform steuert die Kamera 2 für jedes Bild die Lichtquelle 3 in der Weise an, dass zum Aufnahmezeitpunkt des Bildes eine Beleuchtung des Aufnahmebereichs während der Aufnahmezeitdauer vorliegt. Beispielsweise liegt die Beleuchtungszeit der Lichtquelle 3 bei 30 bis 70 µs pro Bild. In analoger Weise kann die zweite Kamera 19 auch die zweite Lichtquelle 20 ansteuern. Die Kamera 2 und/oder die zweite Kamera 19 können beispielsweise als High Speed Kamera beispielsweise der Firma Teledyne Dalsa mit einem Bildsensor der Firma Sony mit der Produktbezeichnung IMX 250 ausgebildet sein.

Das beschriebene Verfahren kann beispielsweise verwendet werden, um abhängig von der Anzahl der Personen des Fahrzeuges eine Mautgebühr für die Straße für das Fahrzeug zu berechnen. Zudem kann in Weiterbildungen das Anlegen eines Sicherheitsgurtes, die Benutzung eines Mobilfunkgerätes während des Fahrens überwacht werden. Weiterhin kann die Anzahl der Personen eines Fahrzeuges beispielsweise bei Auftreten eines Unfalls automatisch erfasst werden.

Die Lichtquelle 3 und/oder die zweite Lichtquelle 20 sind beispielsweise als Hochleistungs-LEDs ausgebildet. Zudem kann mithilfe der Kameras gleichzeitig mithilfe einer Bilderkennung eines Kennzeichens des Fahrzeuges durch die aufgenommenen Bilder automatisch erfasst und mit der Information über die Anzahl der Personen abgespeichert beziehungsweise ausgegeben werden. Bei der Verwendung einer Künstlichen Intelligenz, insbesondere eines trainierten neuronalen Netzes, ist die Künstliche Intelligenz ausgebildet, um automatisch mithilfe eines Bilderkennungsverfahrens das Nummernschild des Fahrzeuges zu erkennen.

In einer weiteren Ausführungsform kann beispielsweise die zweite Lichtquelle 20 frontal elektromagnetische Strahlung auf das Fahrzeug abgeben, wobei die Kamera neben der Straße mit einem Winkel von 10 bis 50° zu einer Fahrtrichtung beziehungsweise zu einer Längsrichtung der Straße ausgerichtet ist. Beispielsweise ist der Abstand zwischen der Kamera und dem Fahrzeug in einem Bereich zwischen 7 und 10 m beziehungsweise in einem Bereich zwischen 3 und 8 m. Vorzugsweise werden die erste und/oder die zweite Lichtquelle neben der Straße oder mithilfe einer Halterung über der Straße angeordnet.

Abhängig von der gewählten Ausführungsform kann es vorgesehen sein, dass eine Bedienperson die ausgewählten und analysierten Bilder noch mal überprüft, wenn die Anzahl der mithilfe der zweiten Recheneinheit 12 ermittelte Anzahl von Personen unter einer vorgegebenen Wahrscheinlichkeit liegt oder nicht mit einer vorab mitgeteilten Anzahl von Personen übereinstimmt. Insbesondere automatische Bildauswerteverfahren wie z.B. trainierte neuronale Netze geben zusätzlich zu der Anzahl der ermittelten Personen im Fahrzeug auch eine Wahrscheinlichkeit für die Richtigkeit der Anzahl der Personen im Fahrzeug aus. Die Bedienperson kann die tatsächliche Anzahl selbst noch mal überprüfen und im Datenspeicher der zweiten Recheneinheit 12 korrigieren. Dabei kann die Bedienperson sich die Bilder der ersten und/oder der zweiten Kamera ansehen und gemeinsam auf einem Display bewerten.

Abhängig von der gewählten Ausführung können die Funktionen der zweiten Recheneinheit 12 auch von der Recheneinheit 7 ausgeführt werden und es kann auf die zweite Recheneinheit 12 verzichtet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Fahrzeug
- 2: Kamera
- 3: Lichtquelle
- 4: Steuerleitung
- 5: Person
- 6: Sensor
- 7: Recheneinheit
- 8: Datenspeicher
- 9: erstes Bild
- 10: zweites Bild
- 11: drittes Bild
- 12: zweite Recheneinheit
- 13: Ausgang
- 14: Beleuchtungsbereich
- 15: Aufnahmebereich
- 16: Straße
- 17: Fahrtrichtung
- 18: viertes Bild
- 19: zweite Kamera
- 20: zweite Lichtquelle
- 21: zweiter Datenspeicher
- 22: erstes weiteres Bild
- 23: zweites weiteres Bild
- 24: drittes weiteres Bild
- 25: zweiter Aufnahmebereich
- 26: zweiter Beleuchtungsbereich
- 27: elektromagnetische Strahlung
- 28: Datenleitung
- 29: weiterer Datenspeicher
- 30: weitere Recheneinheit
- 31: Ankunftszeitpunkt
- 32: Zeitbereich
- 40: weitere Datenleitung
- 41: zweite Datenleitung
- 42: dritte Datenleitung

## Patentansprüche

1. Verfahren zum Ermitteln einer Anzahl von Personen in einem fahrenden Fahrzeug, wobei von einer Kamera zeitlich nacheinander mehrere Bilder von einem Aufnahmebereich gemacht werden und die Bilder in einem Datenspeicher gespeichert werden, wobei Aufnahmezeitpunkte, zu denen die Bilder aufgenommen wurden, zusätzlich zu den Bildern im Datenspeicher gespeichert werden, wobei mithilfe eines Sensors ein Ankunftszeitpunkt des fahrenden Fahrzeuges im Aufnahmebereich ermittelt wird, wobei anhand des Ankunftszeitpunktes wenigstens ein Bild aus dem Datenspeicher ausgewählt wird, das in einem Zeitbereich um den Ankunftszeitpunkt aufgenommen wurde, wobei anhand des wenigstens einen ausgewählten Bildes die Anzahl der Personen im Fahrzeug ermittelt wird.

2. Verfahren nach Anspruch 1, wobei die Kamera die Bilder des Aufnahmebereiches zu Aufnahmezeitpunkten aufnimmt, wobei der Aufnahmebereich mithilfe einer Lichtquelle zu den Aufnahmezeitpunkten beleuchtet wird.

3. Verfahren nach Anspruch 2, wobei die Lichtquelle elektromagnetische Strahlung mit einer Wellenlänge zwischen 720 nm und 750 nm, insbesondere zwischen 730 nm und 735 nm abgibt.

4. Verfahren nach einem der vorhergehenden Ansprüche, wobei die Kamera Bilder mit einer Aufnahmerate von mehr als 40 Bilder pro Sekunde aufnimmt, wobei insbesondere die Kamera Bilder mit einer Aufnahmerate von mehr als 60 oder 75 Bilder pro Sekunde aufnimmt und im Datenspeicher speichert.

5. Verfahren nach einem der Ansprüche 2 bis 4, wobei die Lichtquelle eine elektromagnetische Strahlung mit einer Strahlungsleistung von wenigstens 1.000.000 Lumen, insbesondere von wenigstens 2.000.000 Lumen abgibt und/oder die Lichtquelle eine elektromagnetische Strahlung gepulst mit einer Beleuchtungszeit von weniger als 70µs, insbesondere weniger als 50µs oder weniger als 35ms aufweist, und wobei insbesondere die Lichtquelle die elektromagnetische Strahlung gepulst zu den Aufnahmezeitpunkten der Kamera abgibt.

6. Verfahren nach einem der vorhergehenden Ansprüche, wobei mehrere Bilder, insbesondere zwei bis 10 Bilder, in einem Zeitbereich um den Ankunftszeitpunkt aus dem Datenspeicher ausgewählt werden, wobei anhand der ausgewählten Bilder die Anzahl der Personen im Fahrzeug für jedes der ausgewählten Bilder ermittelt wird, wobei die ausgewählten Bilder dahingehend untersucht werden, welches der ausgewählten Bilder die größte Anzahl der Personen im Fahrzeug zeigt, und wobei die größte Anzahl der Personen der Bilder als Anzahl von Personen im Fahrzeug ausgegeben wird.

7. Verfahren nach einem der vorhergehenden Ansprüche, wobei das wenigstens eine ausgewählte Bild mithilfe einer Künstlichen Intelligenz, insbesondere mithilfe eines trainierten neuronalen Netzes, dahingehend ausgewertet wird, wie viele Personen im Fahrzeug in dem wenigstens einem ausgewählten Bild erkennbar sind.

8. Verfahren nach Anspruch 6 und 7, wobei mehrere ausgewählten Bilder mithilfe der Künstlichen Intelligenz, insbesondere mithilfe des trainierten neuronalen Netzes, dahingehend ausgewertet werden, wie viele Personen in den ausgewählten Bildern erkennbar sind, und wobei die Anzahl der erkannten Personen der ausgewählten Bilder, die eine größte Anzahl der Personen darstellt als Anzahl der Personen des Fahrzeuges von der Künstlichen Intelligenz ausgegeben wird.

9. Verfahren nach einem der vorhergehenden Ansprüche, wobei von einer zweiten Kamera zeitlich nacheinander mehrere weitere Bilder von einem zweiten Aufnahmebereich gemacht werden und die weiteren Bilder in einem Datenspeicher gespeichert werden, wobei Aufnahmezeitpunkte der weiteren Bilder im Datenspeicher gespeichert werden, wobei mithilfe eines Sensors ein zweiter Ankunftszeitpunkt des fahrenden Fahrzeuges im zweiten Aufnahmebereich ermittelt wird, wobei anhand des zweiten Ankunftszeitpunktes wenigstens ein weiteres Bild aus dem Datenspeicher ausgewählt wird, das in einem Zeitbereich um den zweiten Ankunftszeitpunkt aufgenommen wurde, wobei anhand des wenigstens einen ausgewählten weiteren Bildes eine zweite Anzahl der Personen im Fahrzeug ermittelt wird, und wobei abhängig von der ermittelten Anzahl der Personen und der ermittelten zweiten Anzahl der Personen eine Anzahl der Personen im Fahrzeug ermittelt wird, wobei insbesondere die größere Anzahl der ermittelten Anzahl der Personen und der ermittelten zweiten Anzahl der Personen als Anzahl der Personen im Fahrzeug ermittelt und ausgegeben wird.

10. Vorrichtung zum Ermitteln einer Anzahl von Personen (5) in einem Fahrzeug (1), mit einer Kamera (2), mit einem Datenspeicher (8), mit einem Sensor (6), mit wenigstens einer Recheneinheit (7), wobei die Kamera (2, 19) ausgebildet ist, um zeitlich nacheinander mehrere Bilder (9, 10, 11) von einem Aufnahmebereich (15) zu machen und die Bilder mit Aufnahmezeitpunkten, zu denen die Bilder (9, 10, 11) aufgenommen wurden, in dem Datenspeicher (8, 21) zu speichern, wobei der Sensor (6) ausgebildet ist, eine relative Position des Fahrzeuges (1) gegenüber dem Sensor (6) zu erfassen, wobei der Sensor und/oder die Recheneinheit (7) ausgebildet sind, eine Geschwindigkeit des Fahrzeuges (1) zu berechnen, wobei die Recheneinheit (7) ausgebildet ist, um abhängig von der relativen Position des Fahrzeuges (1), der Geschwindigkeit des Fahrzeuges und einer Entfernung des Fahrzeuges (1) vom Aufnahmebereich (15) einen Ankunftszeitpunkt des Fahrzeuges (1) im Aufnahmebereich (15) zu ermitteln, wobei die Recheneinheit (7) ausgebildet ist, um anhand wenigstens eines Bildes (9, 10, 11) aus dem Datenspeicher (8), das in einem Zeitbereich um den Ankunftszeitpunkt aufgenommen wurde, die Anzahl der Personen (5) im Fahrzeug (1) zu ermitteln.

11. Vorrichtung nach Anspruch 10, wobei die Kamera (2) ausgebildet ist, die Bilder (9, 10, 11) des Aufnahmebereiches (15) zu Aufnahmezeitpunkten, insbesondere mit gleichen zeitlichen Abständen zwischen den Aufnahmezeitpunkten, aufzunehmen, wobei insbesondere die Kamera (2) ausgebildet ist, wenigstens 40 Bilder pro Sekunde aufzunehmen, wobei eine Lichtquelle (3) vorgesehen ist, wobei die Lichtquelle (3) ausgebildet ist, um den Aufnahmebereich (15) zu den Aufnahmezeitpunkten zu beleuchten, wobei die Lichtquelle (3) ausgebildet ist, um eine elektromagnetische Strahlung (27) mit einer Wellenlänge zwischen 720 nm und 750 nm, insbesondere zwischen 730 nm und 735 nm abzugeben.

12. Vorrichtung nach Anspruch 10 oder 11, wobei die Lichtquelle (3) ausgebildet ist, die elektromagnetische Strahlung mit einer Lichtleistung von wenigstens 1.000.000 Lumen, insbesondere wenigstens 2.000.000 Lumen oder mehr abzugeben, und/oder wobei die Lichtquelle (3) ausgebildet ist, um die elektromagnetische Strahlung (27) mit einer Beleuchtungszeit von weniger als 70µs, insbesondere von weniger als 60µs oder von weniger als 30µs abzugeben, wobei insbesondere die Lichtquelle (3) die elektromagnetische Strahlung (27) gepulst zu den Aufnahmezeitpunkten der Kamera (2) abgibt.

13. Vorrichtung nach einem der Ansprüche 10 bis 12, wobei die Recheneinheit (7, 12) ausgebildet ist, ein Programm in Form einer Künstlichen Intelligenz, insbesondere in Form eines trainierten neuronalen Netzes, auszuführen, wobei die Künstliche Intelligenz ausgebildet ist, das wenigstens eine ausgewählte Bild (9, 10, 11) dahingehend auszuwerten, wie viele Personen in dem ausgewählten Bild (9, 10, 11) erkennbar sind, und wobei die Recheneinheit (7, 12) ausgebildet ist, die erkannte Anzahl an Personen (5) im Bild als Anzahl der Personen (5) im Fahrzeug (1) auszugeben.

14. Vorrichtung nach Anspruch 13, wobei mehrere im Datenspeicher (8) gespeicherte Bilder (9, 10, 11) in einem Zeitbereich um den Ankunftszeitpunkt ausgewählt werden, wobei insbesondere die Recheneinheit (7) ausgebildet ist, zwei bis 10 Bilder in dem Zeitbereich um den Ankunftszeitpunkt aus dem Datenspeicher (8) auszuwählen, und wobei die künstliche Intelligenz ausgebildet ist, die Anzahl der erkannten Personen (5) anhand der ausgewählten Bilder (9, 10, 11) zu ermitteln, wobei insbesondere die Künstliche Intelligenz ausgebildet ist, die größte ermittelte Anzahl der Personen (5) der ausgewählten Bilder (9, 10, 11) als Anzahl der Personen (5) des Fahrzeuges (1) zu ermitteln.

15. Vorrichtung nach einem der Ansprüche 10 bis 14, mit einer zweiten Kamera (19), wobei die zweite Kamera (19) ausgebildet ist, um zeitlich nacheinander mehrere weitere Bilder (22, 23, 24) von einem zweiten Aufnahmebereich (25) zu machen und die weiteren Bilder (22, 23, 24) mit Aufnahmezeitpunkten der weiteren Bilder (22, 23, 24) in dem Datenspeicher (8) oder in einem zweiten Datenspeicher (21) zu speichern, wobei die Recheneinheit (7) ausgebildet ist, um abhängig von der relativen Position des Fahrzeuges (1) gegenüber dem Sensor (6), der Geschwindigkeit des Fahrzeuges (1) und einer Entfernung des Fahrzeuges (1) vom zweiten Aufnahmebereich (25) einen zweiten Ankunftszeitpunkt des Fahrzeuges (1) im zweiten Aufnahmebereich (25) zu ermitteln, wobei die Recheneinheit (7) ausgebildet ist, um abhängig von wenigstens einem ausgewählten weiteren Bild (22, 23, 24), das in einem Zeitbereich um den zweiten Ankunftszeitpunkt aufgenommen wurde, die Anzahl der Personen (5) im Fahrzeug (1) zu ermitteln.

## Claims

1. Method for determining a number of persons in a travelling vehicle, wherein multiple images of a recording area are taken in chronological succession by a camera and the images are stored in a data memory, wherein recording points in time, at which the images were recorded, are stored in the data memory in addition to the images, wherein an arrival point in time of the travelling vehicle in the recording area is determined with the aid of a sensor, wherein at least one image, which was recorded in a time range around the arrival point in time, is selected from the data memory on the basis of the arrival point in time, wherein the number of persons in the vehicle is determined on the basis of the at least one selected image.

2. Method according to Claim 1, wherein the camera records the images of the recording area at recording points in time, wherein the recording area is illuminated with the aid of a light source at the recording points in time.

3. Method according to Claim 2, wherein the light source emits electromagnetic radiation at a wavelength between 720 nm and 750 nm, in particular between 730 nm and 735 nm.

4. Method according to any one of the preceding claims, wherein the camera records images at a recording rate of more than 40 images per second, wherein in particular the camera records images at a recording rate of more than 60 or 75 images per second and stores them in the data memory.

5. Method according to any one of Claims 2 to 4, wherein the light source emits electromagnetic radiation having a radiant power of at least 1,000,000 lumen, in particular of at least 2,000,000 lumen, and/or the light source has electromagnetic radiation pulsed with an illumination time of less than 70 µs, in particular less than 50 µs or less than 35 µs, and wherein in particular the light source emits the electromagnetic radiation in a pulsed manner at the recording points in time of the camera.

6. Method according to any one of the preceding claims, wherein multiple images, in particular two to 10 images, are selected in a time range around the arrival point in time from the data memory, wherein the number of persons in the vehicle is determined for each of the selected images on the basis of the selected images, wherein the selected images are examined as to which of the selected images shows the greatest number of persons in the vehicle, and wherein the greatest number of persons in the images is output as the number of persons in the vehicle.

7. Method according to any one of the preceding claims, wherein the at least one selected image is evaluated with the aid of artificial intelligence, in particular with the aid of a trained neural network, as to how many persons are recognizable in the vehicle in the at least one selected image.

8. Method according to Claims 6 and 7, wherein multiple selected images are evaluated with the aid of the artificial intelligence, in particular with the aid of the trained neural network, as to how many persons are recognizable in the selected images, and wherein the number of recognized persons in the selected images which represents a largest number of persons is output as the number of persons in the vehicle by the artificial intelligence.

9. Method according to any one of the preceding claims, wherein multiple further images of a second recording area are taken in chronological succession by a second camera and the further images are stored in a data memory, wherein recording points in time of the further images are stored in the data memory, wherein a second arrival point in time of the travelling vehicle in the second recording area is determined with the aid of a sensor, wherein at least one further image, which was recorded in a time range around the second arrival point in time, is selected from the data memory on the basis of the second arrival point in time, wherein a second number of persons in the vehicle is determined on the basis of the at least one selected further image, and wherein a number of persons in the vehicle is determined depending on the determined number of persons and the determined second number of persons, wherein in particular the greater number of the determined number of persons and the determined second number of persons is determined and output as the number of persons in the vehicle.

10. Device for determining a number of persons (5) in a vehicle (1), having a camera (2), having a data memory (8), having a sensor (6), having at least one computing unit (7), wherein the camera (2, 19) is designed to take multiple images (9, 10, 11) of a recording area (15) in chronological succession and to store the images with recording points in time, at which the images (9, 10, 11) were recorded, in the data memory (8, 21), wherein the sensor (6) is designed to detect a relative position of the vehicle (1) in relation to the sensor (6), wherein the sensor and/or the computing unit (7) are designed to compute a velocity of the vehicle (1), wherein the computing unit (7) is designed to determine, depending on the relative position of the vehicle (1), the velocity of the vehicle, and a distance of the vehicle (1) from the recording area (15), an arrival point in time of the vehicle (1) in the recording area (15), wherein the computing unit (7) is designed to determine the number of persons (5) in the vehicle (1) on the basis of at least one image (9, 10, 11) from the data memory (8), which was recorded in a time range around the arrival point in time.

11. Device according to Claim 10, wherein the camera (2) is designed to record the images (9, 10, 11) of the recording area (15) at recording points in time, in particular with equal time intervals between the recording points in time, wherein in particular the camera (2) is designed to record at least 40 images per second, wherein a light source (3) is provided, wherein the light source (3) is designed to illuminate the recording area (15) at the recording points in time, wherein the light source (3) is designed to emit electromagnetic radiation (27) at a wavelength between 720 nm and 750 nm, in particular between 730 nm and 735 nm.

12. Device according to Claim 10 or 11, wherein the light source (3) is designed to emit the electromagnetic radiation at a light power of at least 1,000,000 lumen, in particular at least 2,000,000 lumen or more, and/or wherein the light source (3) is designed to emit the electromagnetic radiation (27) with an illumination time of less than 70 µs, in particular of less than 60 µs or of less than 30 µs, wherein in particular the light source (3) emits the electromagnetic radiation (27) in a pulsed manner at the recording points in time of the camera (2).

13. Device according to any one of Claims 10 to 12, wherein the computing unit (7, 12) is designed to execute a program in the form of artificial intelligence, in particular in the form of a trained neural network, wherein the artificial intelligence is designed to evaluate the at least one selected image (9, 10, 11) as to how many persons are recognizable in the selected image (9, 10, 11), and wherein the computing unit (7, 12) is designed to output the recognized number of persons (5) in the image as the number of persons (5) in the vehicle (1).

14. Device according to Claim 13, wherein multiple images (9, 10, 11) stored in the data memory (8) are selected in a time range around the arrival point in time, wherein in particular the computing unit (7) is designed to select two to 10 images in the time range around the arrival point in time from the data memory (8), and wherein the artificial intelligence is designed to determine the number of recognized persons (5) on the basis of the selected images (9, 10, 11), wherein in particular the artificial intelligence is designed to determine the greatest determined number of persons (5) in the selected images (9, 10, 11) as the number of persons (5) in the vehicle (1).

15. Device according to any one of Claims 10 to 14, having a second camera (19), wherein the second camera (19) is designed to take multiple further images (22, 23, 24) of a second recording area (25) in chronological succession and to store the further images (22, 23, 24) with recording points in time of the further images (22, 23, 24) in the data memory (8) or in a second data memory (21), wherein the computing unit (7) is designed to determine, depending on the relative position of the vehicle (1) in relation to the sensor (6), the velocity of the vehicle (1), and a distance of the vehicle (1) from the second recording area (25), a second arrival point in time of the vehicle (1) in the second recording area (25), wherein the computing unit (7) is designed to determine the number of persons (5) in the vehicle (1) depending on at least one selected further image (22, 23, 24), which was recorded in a time range around the second arrival point in time.

## Revendications

1. Procédé destiné à déterminer un nombre de personnes dans un véhicule en marche, plusieurs images d'une zone d'enregistrement étant prises successivement dans le temps par une caméra et les images étant stockées dans une mémoire de données, des heures d'enregistrement, auxquelles les images ont été enregistrées, étant stockées en plus des images dans la mémoire de données, une heure d'arrivée du véhicule en marche dans la zone d'enregistrement étant déterminée à l'aide d'un capteur, au moins une image de la mémoire de données étant sélectionnée à l'aide de l'heure d'arrivée, laquelle a été enregistrée dans une plage de temps autour de l'heure d'arrivée, le nombre des personnes dans le véhicule étant déterminé à l'aide de l'au moins une image sélectionnée.

2. Procédé selon la revendication 1, la caméra enregistrant les images de la zone d'enregistrement à des heures d'enregistrement, la zone d'enregistrement étant éclairée à l'aide d'une source de lumière aux heures d'enregistrement.

3. Procédé selon la revendication 2, la source de lumière émettant un rayonnement électromagnétique avec une longueur d'onde entre 720 nm et 750 nm, en particulier entre 730 nm et 735 nm.

4. Procédé selon l'une des revendications précédentes, la caméra enregistrant des images à une cadence d'enregistrement de plus de 40 images par seconde, la caméra enregistrant en particulier des images à une cadence d'enregistrement de plus de 60 ou 75 images par seconde et les stockant dans la mémoire de données.

5. Procédé selon l'une des revendications 2 à 4, la source de lumière émettant un rayonnement électromagnétique avec une puissance de rayonnement d'au moins 1 000 000 lumens, en particulier d'au moins 2 000 000 lumens, et/ou la source de lumière comportant un rayonnement électromagnétique de manière pulsée avec un temps d'éclairage inférieur à 70 µs, en particulier inférieur à 50 µs ou inférieur à 35 ms, et la source de lumière émettant en particulier le rayonnement électromagnétique de manière pulsée aux heures d'enregistrement de la caméra.

6. Procédé selon l'une des revendications précédentes, plusieurs images, en particulier deux à 10 images, étant sélectionnées dans la mémoire de données dans une plage de temps autour de l'heure d'arrivée, le nombre des personnes dans le véhicule étant déterminé pour chacune des images sélectionnées à l'aide des images sélectionnées, les images sélectionnées étant examinées pour déterminer l'image des images sélectionnées qui montre le plus grand nombre des personnes dans le véhicule, et le plus grand nombre des personnes dans les images étant délivré comme étant le nombre de personnes dans le véhicule.

7. Procédé selon l'une des revendications précédentes, l'au moins une image sélectionnée étant évaluée à l'aide d'une intelligence artificielle, en particulier à l'aide d'un réseau neuronal entraîné pour pouvoir identifier le nombre de personnes dans le véhicule sur l'au moins une image sélectionnée.

8. Procédé selon les revendications 6 et 7, plusieurs images sélectionnées étant évaluées à l'aide de l'intelligence artificielle, en particulier à l'aide du réseau neuronal entraîné, pour pouvoir identifier le nombre de personnes sur les images sélectionnées, et le nombre des personnes identifiées des images sélectionnées, qui représente le plus grand nombre des personnes, étant délivré par l'intelligence artificielle comme étant le nombre des personnes du véhicule.

9. Procédé selon l'une des revendications précédentes, plusieurs autres images d'une deuxième zone d'enregistrement étant prises successivement dans le temps par une deuxième caméra et les autres images étant stockées dans une mémoire de données, des heures d'enregistrement des autres images étant stockées dans la mémoire de données, une deuxième heure d'arrivée du véhicule en marche dans la deuxième zone d'enregistrement étant déterminée à l'aide d'un capteur, au moins une autre image de la mémoire de données étant sélectionnée à l'aide de la deuxième heure d'arrivée, laquelle a été enregistrée dans une plage temporelle autour de la deuxième heure d'arrivée, un deuxième nombre des personnes dans le véhicule étant déterminé à l'aide de l'au moins une autre image sélectionnée, et un nombre des personnes dans le véhicule étant déterminé en fonction du nombre des personnes déterminé et du deuxième nombre des personnes déterminé, en particulier le plus grand nombre du nombre déterminé des personnes et du deuxième nombre déterminé des personnes étant déterminé et délivré comme étant le nombre des personnes dans le véhicule.

10. Dispositif destiné à déterminer un nombre de personnes (5) dans un véhicule (1), avec une caméra (2), avec une mémoire de données (8), avec un capteur (6), avec au moins une unité de calcul (7), la caméra (2, 19) étant formée pour enregistrer successivement dans le temps plusieurs images (9, 10, 11) d'une zone d'enregistrement (15) et pour mémoriser les images avec des heures d'enregistrement, auxquelles les images (9, 10, 11) ont été enregistrées, dans la mémoire de données (8, 21), le capteur (6) étant formé pour détecter une position relative du véhicule (1) par rapport au capteur (6), le capteur et/ou l'unité de calcul (7) étant formés pour calculer une vitesse du véhicule (1), l'unité de calcul (7) étant formée pour, en fonction de la position relative du véhicule (1), de la vitesse du véhicule et d'un éloignement du véhicule (1) par rapport à la zone d'enregistrement (15), déterminer une heure d'arrivée du véhicule (1) dans la zone d'enregistrement (15), l'unité de calcul (7) étant formée pour déterminer le nombre des personnes (5) dans le véhicule (1) à l'aide d'au moins une image (9, 10, 11) de la mémoire de données (8), qui a été enregistrée dans une plage de temps autour de l'heure d'arrivée.

11. Dispositif selon la revendication 10, la caméra (2) étant formée pour enregistrer les images (9, 10, 11) de la zone d'enregistrement (15) à des heures d'enregistrement, en particulier à des intervalles de temps égaux entre les heures d'enregistrement, en particulier la caméra (2) étant formée pour enregistrer au moins 40 images par seconde, une source de lumière (3) étant prévue, la source de lumière (3) étant formée pour éclairer la zone d'enregistrement (15) aux heures d'enregistrement, la source de lumière (3) étant formée pour émettre un rayonnement électromagnétique (27) avec une longueur d'onde entre 720 nm et 750 nm, en particulier entre 730 nm et 735 nm.

12. Dispositif selon la revendication 10 ou 11, la source de lumière (3) étant formée pour émettre le rayonnement électromagnétique avec une puissance de lumière d'au moins 1 000 000 lumens, en particulier d'au moins 2 000 000 lumens ou plus, et/ou la source de lumière (3) étant formée pour émettre le rayonnement électromagnétique (27) avec un temps d'éclairage inférieur à 70 µs, en particulier inférieur à 60 µs ou inférieur à 30 µs, la source de lumière (3) émettant en particulier le rayonnement électromagnétique (27) de manière pulsée aux heures d'enregistrement de la caméra (2).

13. Dispositif selon l'une des revendications 10 à 12, l'unité de calcul (7, 12) étant formée pour exécuter un programme sous la forme d'une intelligence artificielle, en particulier sous la forme d'un réseau neuronal entraîné, l'intelligence artificielle étant formée pour évaluer l'au moins une image (9, 10, 11) sélectionnée pour pouvoir identifier le nombre de personnes sur l'image (9, 10, 11) sélectionnée, et l'unité de calcul (7, 12) étant formée pour délivrer le nombre identifié de personnes (5) sur l'image comme étant le nombre des personnes (5) dans le véhicule (1).

14. Dispositif selon la revendication 13, plusieurs images (9, 10, 11) stockées dans la mémoire de données (8) étant sélectionnées dans une plage de temps autour de l'heure d'arrivée, en particulier l'unité de calcul (7) étant formée pour sélectionner deux à 10 images dans la plage de temps autour de l'heure d'arrivée dans la mémoire de données (8), l'intelligence artificielle étant formée pour déterminer le nombre des personnes (5) identifiées à l'aide des images (9, 10, 11) sélectionnées, l'intelligence artificielle étant formée en particulier pour déterminer le plus grand nombre déterminé des personnes (5) des images (9, 10, 11) sélectionnées comme étant le nombre des personnes (5) du véhicule (1).

15. Dispositif selon l'une des revendications 10 à 14, avec une deuxième caméra (19), la deuxième caméra (19) étant formée pour prendre successivement plusieurs autres images (22, 23, 24) d'une deuxième zone d'enregistrement (25) et pour stocker les autres images (22, 23, 24) avec des heures d'enregistrement des autres images (22, 23, 24) dans la mémoire de données (8) ou dans une deuxième mémoire de données (21), l'unité de calcul (7) étant formée pour déterminer, en fonction de la position relative du véhicule (1) par rapport au capteur (6), de la vitesse du véhicule (1) et d'un éloignement du véhicule (1) par rapport à la deuxième zone d'enregistrement (25), une deuxième heure d'arrivée du véhicule (1) dans la deuxième zone d'enregistrement (25), l'unité de calcul (7) étant formée pour déterminer, en fonction d'au moins une autre image (22, 23, 24) sélectionnée, qui a été enregistrée dans une plage de temps autour de la deuxième heure d'arrivée, le nombre des personnes (5) dans le véhicule (1).
